Europäisches Patentamt

(19) European Patent Office

Office européen des brevets

(11) Publication number : **0 196 797
B1**

(12) # EUROPEAN PATENT SPECIFICATION

(45) Date of publication of patent specification :
19.07.89

(21) Application number : **86301621.8**

(22) Date of filing : **07.03.86**

(51) Int. Cl.⁴ : **F 16 F    9/44**

---

(54) **Hydraulic damper.**

---

(30) Priority : **29.03.85 US 717641**

(43) Date of publication of application :
**08.10.86 Bulletin 86/41**

(45) Publication of the grant of the patent :
**19.07.89 Bulletin 89/29**

(84) Designated contracting states :
**DE FR GB IT**

(56) References cited :
EP--A-- 0 155 102
DE--A-- 2 807 868
FR--A-- 2 384 997
US--A-- 3 420 341
US--A-- 4 606 440

(73) Proprietor : **GENERAL MOTORS CORPORATION
General Motors Building 3044 West Grand Boulevard
Detroit Michigan 48202 (US)**

(72) Inventor : **Fannin, Wayne Vincent
2098 Upper Bellbrook Road
Xenia Ohio 45385 (US)**
Inventor : **Fenton, Frank Montgomery
20 East Salem Street
Clayton Ohio 45315 (US)**

(74) Representative : **Breakwell, John Neil Bower et al
GM Patent Section Vauxhall Motors Limited Luton
Office (F6) P.O. Box No. 3 Kimpton Road
Luton Bedfordshire LU2 0SY (GB)**

## Description

This invention relates to a hydraulic damping unit as specified in the preamble of claim 1, for example as disclosed in US-A-3 420 341.

Prior to the present invention, various hydraulic dampers, i. e. shock absorbers and suspension struts, have been engineered with selectively variable orificing to control oil flow through the piston as it reciprocates in the cylinder tube, to thereby control the action of the associated vehicle suspension springs. Generally such dampers involve costly and relatively complex blow-off valving and controls, and do not meet requirements for wide-range two-stage operation.

Thus, for example, US-A-3 420 341 discloses a hydraulic damping unit in which a piston assembly is formed from two cylindrical pieces which are axially arranged in contact with one another and are relatively movable to one another in order to vary the extent to which axial passages formed in each of the cylindrical pieces overlap with one another. Blow-off valves are provided on each end of the piston assembly to close a predetermined number of the axial passages therein, so as to govern which axial passages are open to the passage of hydraulic fluid therethrough during the operation of the damper unit. The resultant piston assembly is expensive to construct in view of the plurality of blow-off valves required in the assembly and the requirement to obtain accurately formed sealing surfaces between the two cylindrical pieces of the assembly.

In contrast to such prior damping units, the present invention is concerned with a hydraulic damping unit constructed to provide a wide range of two-stage performance curves (damping characteristics), and specifically to provide a family of performance curves with knee-type two-stage operation, such as those disclosed in US-A-4 183 509, so that the ride produced in a vehicle equipped with such units is relatively stiff at predetermined low-frequency damper operation and moderated at higher frequencies to provide a relatively softer ride.

To this end a hydraulic damping unit in accordance with the present invention is characterised by the features specified in the characterising portion of claim 1.

·Thereby, a hydraulic damping unit in accordance with the present invention can utilise new and improved variable valving and control which involves minimum change to widely used prior piston valving, and thus can be manufactured economically without a need to drastically change the design of such prior piston valving.

In a hydraulic damper in accordance with the present invention, the hydraulic damper includes a rotatable selector plate operatively mounted on an orifice plate assembly. The orifice plate assembly includes a main body or piston plate with rebound and compression flow passages. The rebound flow passages in the orifice plate assembly include a sized spillway, a « bow tie » form of primary orifice and a central blow-off valve which establishes the knee point (break point) of the performance curves in rebound operation.

The orifice plate assembly has intake passages adjacent the periphery of the orifice plate, used in rebound and compression operation. The selector plate has radially disposed internal pockets on the inner surface thereof providing flow control orifices connecting selector plate windows to the intake passages in the orifice plate under certain operating conditions. The selector plate is turned in response to controls to various rotated positions to register and select spillways and orifices sized to further control the flow through the piston and thereby the resistance to piston stroking action within the cylinder tube. These spillways and orifices connect into a centre passage controlled by blow-off valving which opens at predetermined points to modulate the damping force as operating frequency increases.

Thus the present invention makes available a hydraulic damper having a selection of variable-capacity flow passages which hydraulically are in parallel with the primary flow passages in the orifice plate controlled by the blow-off valve. With such selected capacity by-pass orifice construction, the knee point of the performance (damping) curve can be varied and moved to chosen points for controlling piston velocity and suspension spring damping during rebound.

Compression is controlled by means of an intake valve in the orifice plate, a covering intake valve disc and an intake spring construction.

In the hydraulic damper in accordance with the present invention, also, selector plate rotation is controlled by means of a rotatable shaft extending in a hollow piston rod from an internal or external actuator. If desired, the selector plate can be rotated to a position in which the variable orificing is provided by a sized spillway with minimized flow capacity. With this selection, the flow restriction through the piston is high, and resistance to piston movement is high in the rebound mode of operation. In any event, with high flow restriction the piston velocities are reduced, to provide for a stiff (hard) ride that may be desired under certain vehicle operating conditions such as high-speed cornering. At a predetermined force level the blow-off valve opens to modulate the stiff ride, but there is still quick response and reduced vehicle roll as compared with available intermediate and soft-ride performance curves.

When the selector plate is rotated to a second, intermediate position, the orifice size is increased, for medium or intermediate rebound damping action, and flow through the piston is increased. At a predetermined force level the blow-off valve again opens, to modulate the intermediate rebound control. In this intermediate condition, the resistance of the fluid within the damper to piston stroking in rebound is reduced as compared with the hard-ride selection. With reduced resistance, piston velocity increases, and the ride as a result is softer, to provide a second stepped operating curve.

In a third position or setting, the orifice size is large and optimized for soft ride, so that spring-damping characteristics of the shock absorber are reduced. The blow-off valve opens at a higher frequency, so that the two-stage performance is further separated from the hard and intermediate-ride curves, to provide a selected limit to the softer, boulevard-type ride.

With all of these selected orifice settings, the damper converts rebound motions into heat at selected rates, so that road bumps are cushioned and damped as desired by the vehicle operator.

In the drawings :

Figure 1 is a fragmentary elevational view, with parts broken away and in section, of a preferred embodiment of a hydraulic damper in accordance with the present invention ;

Figure 2 is an enlarged fragmentary sectional view generally on the line 2-2 of Figure 1, in the direction of the arrows, showing the valving of a piston assembly of the hydraulic damper shown in Figure 1 ;

Figure 3 is a cross-sectional view generally on the line 3-3 of Figure 2, in the direction of the arrows, showing a selector plate and an orifice plate relatively rotated to one of a plurality of operating positions for controlling fluid flow through the piston assembly for hard-ride operation during rebound (with a part of the selector plate being shown out of position) ;

Figure 4 is a cross-sectional view similar to Figure 3 but illustrating a condition of further relative rotation of the selector and orifice plates for intermediate-ride operation ;

Figure 4A is a fragmentary sectional view of a portion of the selector and orifice plates generally on the line 4A-4A of Figure 4, in the direction of the arrows ;

Figure 5 is a cross-sectional view similar to Figure 3 but illustrating a condition of relative rotation of the selector and orifice plates to a soft-ride position ; and

Figure 6 shows performance curves illustrating operation of a hydraulic damper in accordance with the present invention.

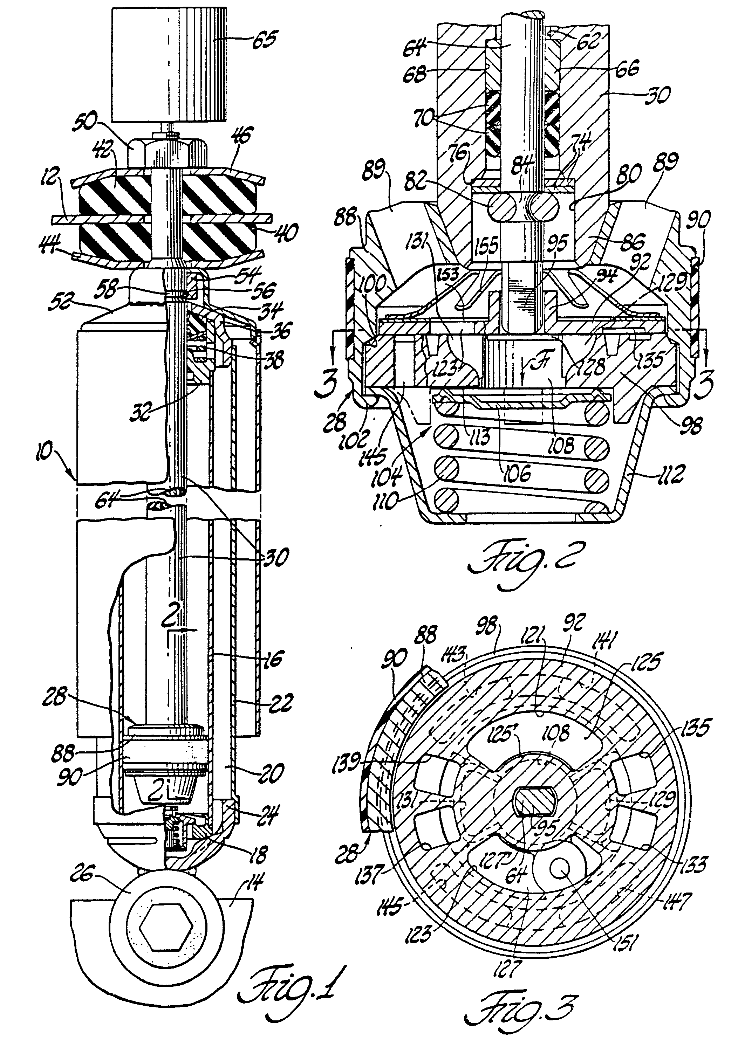

With reference now in greater detail to the drawings, Figure 1 shows a double-acting hydraulic damper 10 operatively mounted between sprung and unsprung components of a vehicle, these components being represented here by an upper support plate 12 connected to the vehicle bodywork and a lower control arm 14 which is mounted to a steering knuckle and road wheel assembly. The damper 10 incorporates an elongate oil-filled cylinder tube 16 having a conventional base valve 18 secured in the lower end thereof to control the passage of oil between the cylinder tube 16 and a surrounding annular oil reservoir 20 formed between the cylinder tube and a reservoir tube 22. The reservoir tube 22 is closed at its lower end by a base cup 24 on which the base valve 18 is seated. A lower mount 26 welded to the exterior of the base cup 24 forms a conventional connection to the control arm 14.

A valved piston assembly 28 and a hollow piston rod 30 connected thereto are operatively mounted for linear stroking movement in the cylinder tube 16 during shock absorber operation. The piston rod 30 extends upwardly from the piston assembly 28 through a conventional rod guide 32 mounted in the upper end of the cylinder tube, and the piston rod further extends through an annular elastomeric seal 34 and through a cup-like seal cover 36 whose peripheral flange fits into and is welded to the upper end of the reservoir tube 22. A helical spring 38 seated on the rod guide 32 and disposed around the piston rod 30 yieldably holds the seal 34 against the inner surface of the seal cover 36. The upper end of the piston rod 30 extends through a pair of elastomeric mounting discs 40, 42 and surrounding backing plates 44, 46 disposed on opposite sides of the discs to sandwich the support plate 12 therebetween. A nut 50 threadedly received on the end of the piston rod 30 seats against the backing plate 46 and holds the elastomeric discs 40, 42 in compression, as seen in Figure 1.

A cup-like upper cover plate 52 through which the piston rod 30 extends is connected to the piston rod immediately below the backing plate 44 by a cylindrical retainer 54 and a co-operating snap ring 56 received in a groove 58 in the piston rod 30. The elastomeric mounting disks 40, 42 are effectively trapped between the upper and lower plates 46, 44, and isolate the piston rod 30 from the vehicle body, as seen in Figure 1. The piston rod 30 has a central bore 62 for receiving an elongate actuator rod (shaft) 64 that extends therethrough.

The actuator rod 64 is driven by a suitable motor 65, which may be external as shown or internal as described in EP-A-0 155 102, and the actuator rod is operatively connected to valving in the piston assembly 28 as described below.

As shown, a lower end portion of the actuator rod 64 is rotatably mounted in a cylindrical bearing 66 which is press-fitted within a small-diameter counterbore 68 in the lower end of the piston rod 30. O-ring seals 70 fitted around the actuator rod 64 below the bearing 66 contact the walls of the counterbore 68 to block the passage of shock absorber oil through the central bore 62 to the exterior of the damper. The actuator rod is retained in the central bore 62 of the piston rod by washers 74 seated against an end wall 76 of a larger-diameter counterbore 80 formed in the piston rod 30, and by a stop ring 82 fitted into a transverse annular groove 84 in the actuator rod 64 at the bottom side of the washers 74. With such construction, the actuator rod 64 cannot be inadvertently withdrawn from the piston rod 30.

The inner end 86 of the piston rod 30 is welded or otherwise fastened to a cylindrical shelllike main body 88 of the piston assembly 28. This main body 88 has upper flow passages 89 therein, and is peripherally bounded by a skirt 90 of polytetrafluorethylene (Teflon) or other suitable plastics material providing low-friction sliding engagement with the inner wall of the cylinder tube 16.

Mounted for axial rotational movement within the confines of the main body 88 of the piston assembly 28 is a rotatable-orifice selector plate 92 having an upstanding neck 94 mounted for up-and-down sliding movement on the flattened lower end 95 of the actuator rod 64 (part of the plate 92 being shown out of position for the purpose of illustration). In addition to the rotatable-orifice selector plate 92, the main body 88 of the piston assembly 28 also houses an orifice plate assembly comprising a cylindrical, relatively thick fixed orifice plate 98. The orifice plate 98 is peripherally secured in the main body 88 of the piston assembly between an inner, annular locator shoulder 100 and an inwardly coined lower annular end 102.

A blow-off valve assembly 104 comprising a relatively flat valve plate 106 is spring-biased by a helical spring 110 against the bottom of the orifice plate 98 to close a passage-like central orifice plate opening 108. This spring 110 is mounted in a hat-shaped cage 112 that is retained in position by the coined end 102 of the piston body 88. A leak path 113 (Figure 2) in the orifice plate 98 can be provided across the valve plate 106 to provide the first stage to the knee point of a quick-response (hard) operating curve.

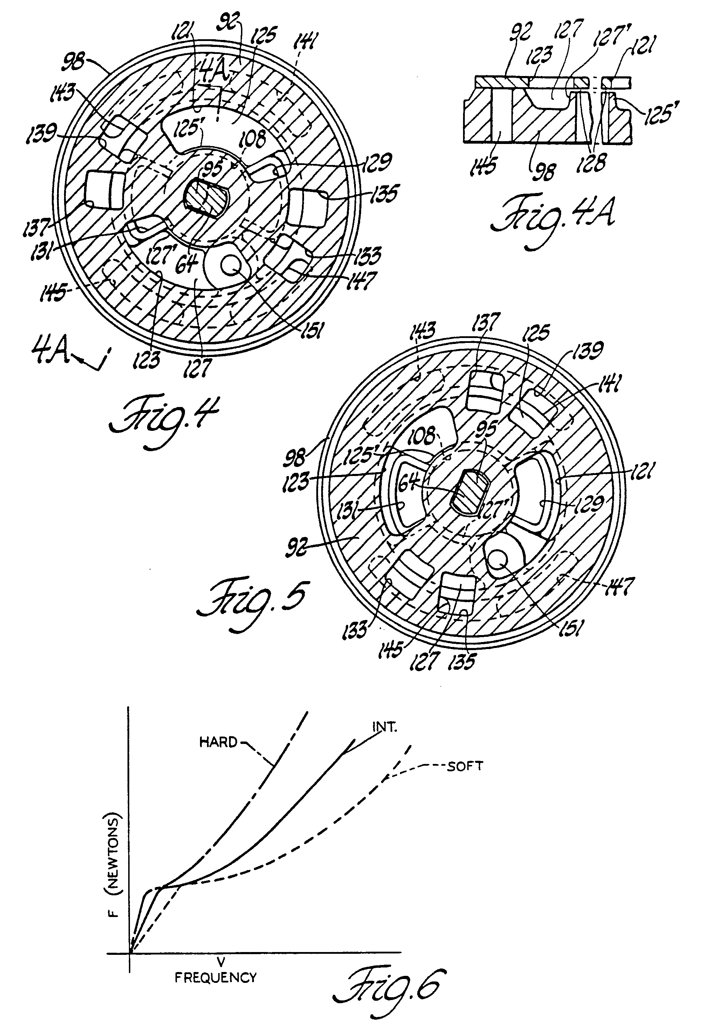

At a predetermined pressure level in a rebound stroke the valve plate 106 is deflected downwardly in response to the forces F (Figure 2) of hydraulic fluid thereon through the flow passages 89. This opens the central opening 108 in the orifice plate 98 to establish the modulation from the knee point of the operating curve, to thereby control fluid flow through the piston assembly under certain operating conditions, as is illustrated by the curves of Figure 6.

The selector plate 92 is rotatable within the cavity of the main body 88 of the piston assembly 28 by rotation of the actuator rod 64 by means of the motor 65. The selector plate 92 has diametrically opposed arcuate intake windows 121, 123 (see Figures 3, 4 and 5) which can be rotated into registry with corresponding arcuate restricted-flow spillway pockets 125, 127 in the orifice plate 98 or with increased-flow « bow tie » pockets 129, 131 also in the orifice plate 98 for controlling the flow of shock absorber fluid through the piston assembly. The spillway pockets 125, 127 have arcuate low-wall dams 125', 127' which co-operate with the bottom surface of the selector plate 92 to form a radial-flow restricted passage such as a passage 128 shown in Figure 4A which is fully open in the hard-ride setting.

The bottom (interface side) of the selector plate 92 is formed with two sets of shallow rectangular pockets 133, 135, 137, 139 which form radial-flow control orifices that can be positioned by rotation of the selector plate to hydraulically connect the intake windows 121, 123 to outer peripheral-flow intake passages 141, 143, 145, 147 in the orifice plate 98. Selector plate rotation is limited by a roll pin 151 which is carried by the orifice plate 98 and rides in the window 123 in the selector plate 92. Contact of the pin 151 with the opposite ends of the window 123 determines registry of the passages with the selector plate openings. The registry of the spillway pockets with the windows 121, 123 is illustrated by Figure 3: it can be by means of other internal stops or by the use of a suitable stepping-type drive motor.

By rotation of the selector plate 92 to selected positions by the motor 65, various combinations of flow control orifices can be chosen to set the two-stage rebound damping characteristics of the shock absorber to meet the operator's requirements and demands. For example, if the selector plate 92 is rotated to the Figure 3 position in which the selector plate windows 121, 123 uncover the spillway pockets 125, 127 in the orifice plate 98, rebound damper oil flowing through the upper flow passages 89 can flow through the restricted spillway passage such as the passage 128 and the leak path 113 to generate the damping force illustrated by the two-stage hard-ride curve of Figure 6, this Figure comprising a graph in which force in Newtons is plotted against frequency in cycles per minute.

The valve plate « pops off » at a predetermined set pressure to establish the two-stage operation with effective modulation of the resistance force offered by this valve setting. With this selection the hydraulic damper has the highest damping force, for quick-response ride with reduced roll, as is desired for sports car performance.

In the event that the operator desires an intermediate ride, the selector plate 92 is rotated counterclockwise from the Figure 3 position until the selector plate intake windows 121, 123 are partially open to the « bow tie » pockets 129, 131, as is seen in Figure 4. There is still flow through the restricted passage 128 as described above and through the radial pockets 133, 139 into the intake passages 147 and 143 respectively. Accordingly, the restriction through the piston has been increased for the rebound stroke. There is still two-stage operation, with the knee point of the intermediate-ride curve moved to the right of that for the hard-ride curve, as shown in Figure 6. In this condition, the resistance to suspension spring action is reduced, with piston velocity on the rebound stroke being increased, as shown by the intermediate-ride curve in Figure 6.

If a soft ride is desired, the selector plate 92 may be selectively rotated to the Figure 5 position so that the intake windows 121, 123 are in full registry with the « bow tie » pockets 129 and 131. The radial pockets 133, 135, 137, 139 register with the intake passages 145, 141 as shown. With the restriction increasing in size, flow through the piston assembly 28 meets reduced resistance. With this action, the suspension spring rate is in effect decreased, as illustrated by the two-stage soft-ride curve in Figure 6, for a boulevard-type ride.

On compression, with the piston assembly 28 moving downwardly, the fluid in the cylinder tube 16 below the piston assembly 28 will flow through the intake passages 141, 143, 145, 147 in the orifice plate 98 to lift the selector plate 92 from the orifice plate 98 and deflect a conventional intake valve disc 153 against the biasing force of an intake valve spring 155 to damp the compression load. The spring 155 is a conventional wave spring which grounds on the inner wall forming the cavity of the main body 88 of the piston assembly. Compression flow then passes out of the piston assembly.

In the preferred embodiment as described of a hydraulic damper in accordance with the present invention, the blow-off point occurs at essentially the same force level for all the selected ride settings, as can be seen by reference to the force levels (F) for the family of curves shown In Figure 6.

The construction of the preferred embodiment is simplified as compared with the prior art. Adjustment movement is not resisted by the force of a main suspension spring ; also, there is motor control of the selector plate as compared with difficult manual adjustment requiring an outer adjusting sleeve to co-operate with an upper seal ; and further, the internally arranged actuator rod 64 does not involve any specific sealing requirement.

Although the preferred embodiment of a hydraulic damper in accordance with the present invention utilises three different selective two-stage control operations, others can be readily provided, so that flow rates through the piston assembly on rebound can be further varied, for further tailoring of the shock absorber or suspension strut action.

## Claims

1. A hydraulic damping unit providing a family of damping curves, each having at least two stages for controlling the spring action of vehicle suspension springs, said unit comprising : a cylinder tube (16) having a hydraulic fluid therein ; a piston assembly (28) mounted for linear movement in said cylinder tube (16) and hydraulically separating said cylinder tube (16) into first and second chambers ; valve means in said piston assembly (28) for controlling the flow of hydraulic fluid between said chambers through said piston assembly (28) ; a piston rod (30) extending from said piston assembly (28) to the exterior of said damper unit ; and an actuator (64) having a rotatable output extending in said piston rod (30) ; the valve means comprising an orifice plate (98) fixed in said piston assembly (28), a selector plate (92) operatively connected to said actuator output for turning said selector plate (92) to predetermined positions, said selector plate (92) having windows (121, 123) therein for selecting and varying hydraulic fluid flow paths through said orifice plate (98), a blow-off valve element (106) operatively disposed beneath said orifice plate (98), and spring means (110) associated therewith, characterised in that said orifice plate (98) has a first flow passage (108) extending axially through the centre thereof ; said spring means (110) associated with the blow-off valve element (106) controls the flow of hydraulic fluid through said first flow passage (108) and is movable to a position whereby said first flow passage (108) is sufficiently opened to establish a second stage of each of said damping curves ; said orifice plate (98) has first and second sets of arcuately-disposed fluid-receiving pockets disposed radially outwards of said first flow passage (108), a first set of said pockets (125, 127) having dams (125', 127') at a radially inner end thereof co-operating with said selector plate (92) to provide a radially-extending flow-restrictive passage (128) interconnected to said first flow passage (108), a second set of said pockets (129, 131) having relatively open passages for fluid at the radial inner ends thereof connected to said first flow passage (108), and said selector plate (92) being rotatable by said actuator (64) so that said windows (121, 123) are only opened to said first set of pockets (125, 127) to allow radial flow of fluid into said first flow passage (108) at a first flow rate to establish a first of said spring damping curves, and is subsequently rotatable to another position so that said windows (121, 123) additionally open to said second set of pockets to allow additional radial flow of fluid into said first flow passage (108) to establish a second flow rate and a second of said spring damping curves ; said orifice plate (98) has secondary axial flow passages (141, 143, 145, 147) disposed radially outwards of said first flow passage (108) ; and a lower face of said selector plate (92) has discrete fluid-receiving recesses (133, 135, 137, 139) formed therein to effect outward radial flow of said fluid from said first set of pockets (125, 127) to said secondary axial flow passages (141, 143, 145, 147) in response to rotation of said selector plate (98) to a predetermined position, so as to establish a third flow rate and a third of said spring damping curves.

2. A hydraulic damping unit according to claim 1, characterised in that the selector plate (92) is mounted for turning movement upon the orifice plate (98), the first flow passage (108) in the orifice plate (98) is operatively covered by said selector plate (92) so as to block the axial flow of fluid therethrough, and the blow-off valve element is a valve plate (106) which is urged into sealing engagement with said orifice plate (98) by said spring means (110).

## Patentansprüche

1. Hydraulische Dämpfungseinheit, die eine Schar von Dämpfungskurven mit jeweils mindestens zwei Zuständen zum Steuern der Federwirkung von Kraftfahrzeug-Aufhängungsfedern schafft, mit : einem Zylinderrohr (16) mit darin befindlichem Hydraulikfluid ; einer linear in dem Zylinderrohr (16) bewegbaren Kolbenanordnung (28), die das Zylinderrohr (16) hydraulisch in erste und zweite Kammern unterteilt ; Ventilmitteln in der Kolbenanordnung (28) zum Steuern der Strömung von Hydraulikfluid zwischen den Kammern durch die Kolbenanordnung (28), einer von der Kolbenanordnung (28) bis außerhalb der Dämpfereinheit reichenden Kolbenstange (30) ; und einem Betätiger (64) mit einem sich in der Kolbenstange (30) erstreckenden drehbaren Abgabeteil ; wobei das Ventilmittel eine in der Kolbenanordnung (28) befestigte Mündungsplatte (98), eine wirksam mit dem Betätigerabgabeteil zum Drehen in vorbestimmte Lagen verbundene Wahlplatte (92) umfaßt, die Wahlplatte (92) Fenster (121, 123) besitzt zum Auswählen und Verändern von Hydraulikfluid-Strömungswegen durch die Mündungsplatte (98), ein Überdruck-Ventilelement (106) wirksam unter der Mündungsplatte (98) angeordnet ist und Federmittel (110) demselben zugeordnet ist, dadurch gekennzeichnet, daß die Mündungsplatte (98) einen sich axial durch ihre Mitte erstreckenden ersten Strömungsdurchlaß (108) besitzt ; daß das dem Überdruck-Ventilelement (106) zugeordnete Federmittel (110) die Strömung von Hydraulikfluid durch den ersten Strömungsdurchlaß (108) steuert und in eine Stellung bewegbar ist, wodurch der erste Strömungsdurchlaß (108) ausreichend geöffnet ist, um eine zweite Stufe jeder Dämpfungskurve zu erreichen ; daß die Mündungsplatte (98) erste und zweite Reihen von bogenförmig angeordneten Fluid-Aufnahmetaschen besitzt, die radial außerhalb des ersten Strömungsdurchlasses (108) angeordnet sind, wobei eine erste Reihe der Taschen (125, 127) Dämme (125', 127') an einem radial inneren Ende derselben besitzt, die mit der Wahlplatte (92) zusammenwirken, um einen sich radial erstreckenden strömungsbeengenden Durchlaß (128) zu schaffen, der mit dem ersten Strömungsdurchlaß (108) verbunden ist, eine zweite Reihe der Taschen (129, 131) relativ offene Fluiddurchlässe an ihren radial inneren Enden besitzt, die mit dem ersten Strömungsdurchlaß (108) verbunden sind, und die Wahlplatte (92) durch den Betätiger (64) so drehbar ist, daß die Fenster (121, 123) nur zu der ersten Reihe von Taschen (125, 127) geöffnet sind, um Fluid-Radialströmung in den ersten Strömungsdurchlaß (108) mit einer ersten Strömungsrate zuzulassen, um eine erste Federdämpfungskurve zu erreichen, und nachfolgend in eine andere Lage drehbar ist, so daß die Fenster (121, 123) sich zusätzlich zu der zweiten Reihe von Taschen öffnen, um zusätzliche Fluid-Radialströmung in den ersten Strömungsdurchlaß (108) zuzulassen, um eine zweite Strömungsrate und eine zweite Federdämpfungskurve zu erreichen ; daß die Mündungsplatte (98) sekundäre Axialströmungsdurchlässe (141, 143, 145, 147) besitzt, die radial außerhalb des ersten Strömungsdurchlasses (108) angeordnet sind ; und eine untere Fläche der Wahlplatte (92) diskrete Fluidaufnahme-Vertiefungen (133, 135, 137, 139) in sich ausgebildet enthält, um nach außen gerichtete Fluid-Radialströmung von der ersten Reihe von Taschen (125, 127) zu den sekundären Axialströmungsdurchlässen (141, 143, 145, 147) in Reaktion auf eine Drehung der Wahlplatte (98) zu einer vorbestimmten Lage zu bewirken, um so eine dritte Strömungsrate und eine dritte Federdämpfungskurve zu erreichen.

2. Hydraulische Dämpfungseinheit nach Anspruch 1, dadurch gekennzeichnet, daß die Wahlplatte (92) zur Drehbewegung auf der Mündungsplatte (98) angebracht ist, daß der erste Strömungsdurchlaß (108) in der Mündungsplatte (98) wirksam durch die Wahlplatte (92) bedeckt ist, um so die axiale Fluidströmung dorthindurch zu sperren, und das Überdruck-Ventilelement eine Ventilplatte (106) ist, die durch das Federmittel (110) in dichtende Anlage mit der Mündungsplatte (98) gedrängt wird.

## Revendications

1. Ensemble d'amortissement hydraulique ayant toute une famille de courbes d'amortissement, chaque courbe ayant au moins deux étages, permettant le réglage de l'action élastique d'un ressort de suspension d'un véhicule, l'ensemble comprenant un tube cylindrique (16) contenant un fluide hydraulique, un ensemble à piston (28) monté afin qu'il se déplace linéairement dans le tube cylindrique (16) et séparant hydrauliquement le tube cylindrique (16) en une première et une seconde chambre, un dispositif à soupapes monté dans l'ensemble à piston (28) et destiné à régler l'écoulement du fluide hydraulique entre les chambres dans l'ensemble à piston (28), une tige (30) de piston dépassant de l'ensemble à piston (28) vers l'extérieur de l'ensemble d'amortissement, et un organe de manœuvre (64) ayant un organe rotatif de sortie pénétrant dans la tige de piston (30), le dispositif à soupapes comprenant une plaque à orifices (98) fixée dans l'ensemble à piston (28), une plaque sélectrice (92) raccordée à l'organe de sortie de l'organe de manœuvre de manière que la plaque sélectrice (92) soit tournée dans les positions prédéterminées, la plaque sélectrice (92) ayant des fenêtres (121, 123) destinées à sélectionner les trajets de circulation du fluide hydraulique et à les faire varier dans la plaque à orifices (98), un élément à soupape (106) de circulation disposé sous la plaque à orifices (98), et un dispositif à ressort (110) qui lui est associé, caractérisé en ce que la plaque à orifices (98) a un premier passage (108) de circulation disposé axialement à son centre, le dispositif à ressort (110) associé à l'élément à soupape de circulation (106) règle l'écoulement du fluide hydraulique dans le premier passage de circulation (108) et est mobile vers une position dans laquelle le premier passage de circulation (108) est suffisamment ouvert pour qu'il détermine un second étage de chacune des courbes d'amortissement, la plaque à orifices (98) a un premier et un second ensemble de logements de réception de fluide qui sont disposés en courbe et radialement vers l'extérieur par rapport au premier passage de circulation (108), un premier ensemble de logements (125, 127) ayant des rebords (125', 127') à leur extrémité radialement interne, coopérant avec la plaque sélectrice (92) afin qu'un passage radial de rétrécissement (128) soit connecté au premier passage de circulation (108), un second ensemble de logements (129, 131) ayant des passages ouverts pour la circulation du fluide à leur extrémité radiale interne connectée au premier passage de circulation (108), et la plaque sélectrice (92) pouvant être tournée par l'organe de manœuvre (64) afin que les fenêtres (121, 123) ne soient en communication qu'avec le premier ensemble de logements (125, 127) et que l'écoulement radial du fluide soit permis dans le premier passage de circulation (108) avec un premier débit déterminant une première des courbes d'amortissement élastique, la plaque pouvant ensuite être tournée dans une autre position afin que les fenêtres (121, 123) soient reliées en outre au second ensemble de logements et que le fluide puisse s'écouler radialement aussi vers le premier passage de circulation (108) en établissant un second débit et une seconde des courbes d'amortissement de ressort, la plaque à orifices (98) a des passages axiaux secondaires de circulation (141, 143, 145, 147) disposés radialement vers l'extérieur du premier passage de circulation (108), et une face inférieure de la plaque sélectrice (92) a des cavités séparées (133, 135, 137, 139) de réception de fluide qui y sont formées afin qu'elles assurent l'écoulement radial vers l'extérieur du fluide provenant du premier ensemble de logements (125, 127) vers les passages axiaux secondaires de circulation (141, 143, 145, 147) à la suite de la rotation de la plaque sélectrice (98) vers une position prédéterminée, afin qu'un troisième débit et une troisième des courbes d'amortissement élastique soient établis.

2. Ensemble d'amortissement hydraulique selon la revendication 1, caractérisé en ce que la plaque sélectrice (92) est montée afin qu'elle puisse tourner sur la plaque à orifices (98), le premier passage de circulation (108) de la plaque à orifices (98) est recouvert par la plaque sélectrice (92) afin que l'écoulement axial du fluide y soit empêché, et l'élément à soupape de circulation est une plaque d'obturation (106) qui est repoussée en coopération étanche avec la plaque à orifices (98) par le dispositif à ressort (110).

Fig.1

Fig.2

Fig.3

1

Fig.4

Fig.4A

Fig.5

Fig.6